# EUROPEAN PATENT SPECIFICATION

(11) **EP 2 483 046 B1**
(45) Date of publication and mention of the grant of the patent: **13.11.2013**
(21) Application number: 10760089.2
(22) Date of filing: 15.09.2010
(51) Int. Cl.: B29B 13/02, B29C 49/64, B29C 49/68, F21V 7/00, H05B 3/00

(54) **ARRANGEMENT OF A COUNTER REFLECTOR DEVICE FOR USE IN HEATING AN OBJECT, INSTALLATION AND METHOD OF HEATING**
ANORDNUNG EINER GEGENREFLEKTORVORRICHTUNG ZUR ERWÄRMUNG EINES OBJEKTS, ANLAGE UND HEIZVERFAHREN
AGENCEMENT D'UN DISPOSITIF DE CONTRE-RÉFLECTEUR DESTINÉ À ÊTRE UTILISÉ POUR CHAUFFER UN OBJET, INSTALLATION ET PROCÉDÉ DE CHAUFFAGE

(30) Priority: 29.09.2009 EP 09305908
(43) Date of publication of application: 08.08.2012
(73) Proprietor: Speziallampenfabrik Dr. Fischer GmbH, 65582 Diez (DE)
(72) Inventor: MONTEIX, Serge, NL-5656 AE Eindhoven (NL)
(74) Representative: Müller, Eckhard
(86) International application number: PCT/IB2010/054158
(87) International publication number: WO 2011/039667

(56) References cited:
- WO-A1-2006/002751
- US-A- 6 005 223
- US-A1- 2008 102 148
- US-B1- 6 632 087

## Description

### FIELD OF THE INVENTION

The present invention relates generally to the heating of objects. It relates more particularly to a heating installation comprising a plurality of heating elements adapted to produce heating of objects that typically move along a path, for instance heating of thermoplastic objects such as plastic preforms. The invention also relates to a counter reflector device for use in heating a moving object, and a method of heating an object with the aid of such a counter reflector device.

### BACKGROUND OF THE INVENTION

Conventional ovens and similar systems for heating an inedible object, for instance a thermoplastic preform intended for the manufacture of a container, are provided with a plurality of radiating lamps. Ovens for blowing plastic preforms to make plastic bottles often are provided with IR lamps, a back-reflector at the rear of the lamps, and a counter reflector arranged opposite the radiation sources.

In a known manner, the preform is heated on the move, its neck facing downward or upward. Each preform is rotated about itself, around a vertical axis, so that the lamps radiate to the whole periphery of the preform body. The height of the heating lamp assembly is chosen in relation to the length of the body of the preform. During heating, the preforms are moving along a path defined between two respective lateral walls of the oven, one of which is provided with the lamps and the back-reflector, the other one being provided with the counter reflector.

WO 2006/002751 A1 discloses such a counter reflector according to the preambles of claims 1 and 9, which is profiled on the surface thereof facing the preform. The IR beams are directed back onto the preform with such a configuration. As a result, losses in the oven are reduced and an appreciable concomitant reduction in the consumption of electrical energy is obtained.

However, the thermoplastic container manufacturers still seek to reduce as far as possible the inherent charges associated with the operation of the machines for manufacturing these containers, and especially the consumption of electrical energy by these machines.

### SUMMARY OF THE INVENTION

The object of the invention is therefore to meet this expectation of users and to provide means suitable for optimizing the efficiency in the heating installation.

Embodiments of the present invention provide a heating installation according to claim 1.

By virtue of this arrangement of shield portions, some parts of the objects to be heated can be protected from the unwanted IR irradiation (e.g. those providing from the main reflective portion). Indeed, as the first shield portion that delimits the cavity is closer to the object to be heated, some parts of the object and/or driving means for moving the object may advantageously be protected from radiation of the lamps, in particular radiation of the lamps that are the most distant from the level of the proximal reflective surface. Losses due to lost radiation are also minimized.

Independently or in combination with what precedes, being understood that each of the details that follow can be implemented in isolation, the heating installation may be provided with a first shield portion defining with the said plane an angle in the range between 45 and 90°. Here, the second shield portion may be integral with the secondary reflective device or correspond to an optional element that can be removed from the secondary reflective device.

With such an arrangement of the first shield portion, a IR cut-off shield is obtained with a high capacity to reflect radiation from the most distant lamps. The free end of such a cut-off shield may also be very close to the object (for instance about 1 cm) to increase the cut-off effect.

Moreover, the part of IR radiation that is reflected by the reflective element is focused on the determined portion of the object.

Therefore, due to the protection of and this focus of IR radiation onto this determined portion of the object by the reflective element, the heat profile on this determined option of the object is different from the thermal profile of the other parts of the object. Additionally, this thermal profile can be tailored by providing an adapted optical design of the reflective element. This heating of this determined portion is accordingly very well controlled while not disturbing the heating of the other parts of the object. This technique is especially useful if one wishes to heat a part of the object differently from the other parts of the object, e.g. a neck of the preform of a PET bottle if said object is such a preform.

Accordingly, the heat flux from the lamps is concentrated over a specific part of the preform height, corresponding to the level of the proximal reflecting surface.

Moreover, the shield portions, by preventing heating outside the concentration area, avoid the use of additional cooling system for the determined portion of the object.

In one particular embodiment of the invention, the secondary reflective device is arranged so that the position of the reflective element with respect to the main reflective portion can be changed, tuned, adapted or adjusted. This gives a flexibility to the installation and to the heating since the invention can be implemented wherever the level of the determined portion is in the object. For example, the reflective element may be displaced along the object height in order to heat another specific region. Moreover, in the same way, one or few other reflective elements with similar or different shapes and properties may be added along the object height. For example, a plurality of reflective elements (e.g. having the same shape and configuration) may be used with a specific distance between each other in order to make hotter parts or lines along the object height. The distance may be adjusted taking into account the geometry of the object and its dynamic (rotation speed and translation) in order to be able to make symmetric hotter parts required for asymmetric bottles in an easier way.

In one particular embodiment of the invention, the reflective surface of the main reflective portion is flat, or comprises cavities to reorient the reflected IR radiation as disclosed for example in WO 2006/002751.

Various embodiments of the heating installation of the invention are described in claims 2 through 8 and are included accordingly in this specification.

One object of the present invention is also to provide a counter reflective device suitable for increasing heating efficiency.

Accordingly, it is further proposed according to the invention a counter reflective device according to claim 9.

Optional embodiments of the counter reflective device are described in claims 10 through 12 and are included accordingly in this specification.

One object of the present invention is also to provide a method adapted for heating objects typically moving along a defined path.

Accordingly, it is further proposed according to the invention a method of heating an object according to claim 13, included accordingly in this specification

It will be obvious that the object is optionally moved during the heating and the word "moved" thus does not exclude heating of an object in a temporary static state.

Optionally, the method comprises heating more in the first operating area than in a second operating area extending between the second reflector and a second section of the first lateral wall provided with at least one of the heating elements, by disposing a reflective surface of the second reflector, arranged between said transverse shield portions, at a proximal location relative to said object.

According to a specific feature, the object to be heated being a thermoplastic preform intended for the manufacture of a container after a forming of the heated object, the method further comprises:
- moving said preform along the defined path through use of a mandrel, the mandrel cooperating with an end neck of the preform, said end neck facing a non heated area;
- rotating said mandrel; and
- at the opposite of the first wall, reflecting with a cut-off by said transverse shield portions of the second reflector any beam of radiation directed toward said non heated area.

Other features and advantages of the invention will become apparent to those skilled in the art during the description which will follow, given by way of a nonlimiting example, with reference to the appended drawings.

### BRIEF DESCRIPTION OF THE DRAWINGS

Fig. 1 shows a side view of a heating installation in accordance with a first embodiment of the invention;
Fig. 2 is a detail of Fig. 1, showing a part of the counter reflector;
Fig. 3 shows a perspective view of a heating installation in accordance with a second embodiment of the invention;
Fig. 4 shows a view similar to Fig. 2 of another embodiment of the counter reflector in accordance with the invention.

### DETAILED DESCRIPTION OF EMBODIMENTS

In the various figures, the same references are used to designate identical or similar elements.

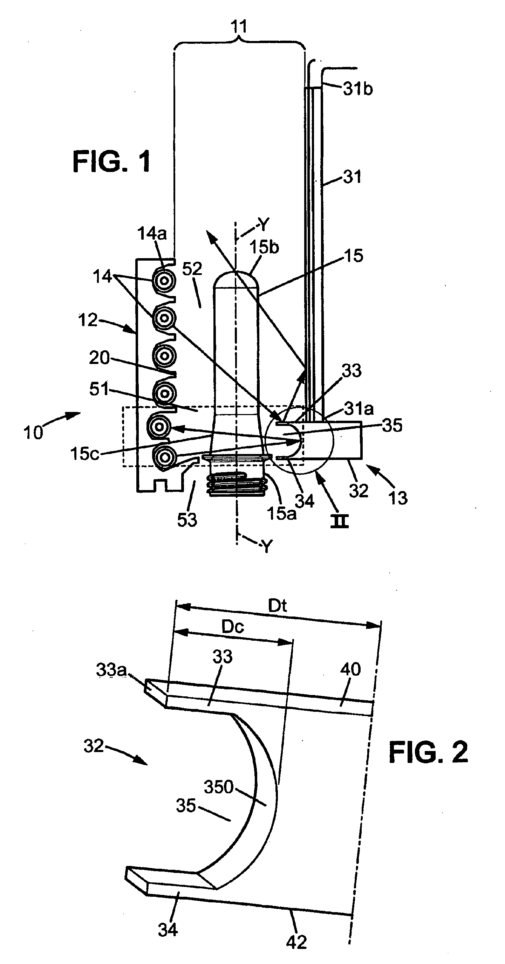

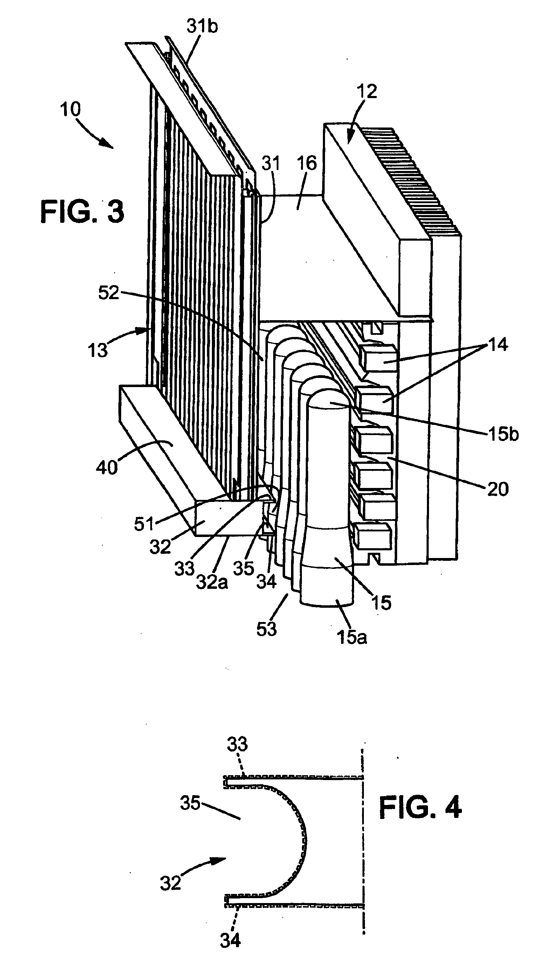

A heating installation 10 in accordance with a first embodiment of the invention is depicted in Figs 1-2. Referring to Fig. 1 the installation may be all or part of an oven. The oven is arranged with a gap 11 between the two lateral walls 12, 13. A first wall 12 of the lateral walls is provided with heating elements 14, here lamps or similar radiating sources each having a tubular outer bulb 14a. IR halogen lamps may be used. In the non-limitative example of Figs. 1 and 3, preforms 15 are moved along a path crossing said gap 11. The preforms 15 are here placed with their necks 15a down. Alternatively, any other heat-sensitive objects may be treated through the installation 10. For instance and in non-limitative manner, the heating installation 10 may be used for any pre-heating application, any heat processing for plastics, heat shrinkage of packaging and may also be used as ovens for semi-conductor, paper applications.

In the non-limitative embodiments of Figs 1 and 3, the heating installation 10 is adapted for use in an oven of a blow molding machine for heating plastic preforms 15 prior to blow molding. The lateral walls 12, 13 of the heating installation 10 are elongated and are facing each other a certain distance apart. Preforms 15 thus can be heated when moving within the gap 11, along a defined path. Each preform 15 is moved longitudinally between the lateral walls 12, 13, typically with a rotation around its axis YY. The preform 15 is subjected to a predetermined heating profile in a short time.

As visible in Fig. 1, the gap 11 may be partly or entirely be closed, beyond the closed end 15b of the preform 15 on the path and near said closed end 15b, here above the closed end 15b, so that at least some of the radiation emitted beyond the closed end 15b of the preform 15 is reflected toward the body 15c of the preform 15. Thereby, the losses due to lost radiation are limited. A transverse plate 16 (only shown in Fig. 3) may be removably mounted on one of the lateral walls 12, 13 of the oven for this purpose. A passage for ventilation, preventing the oven from overheating, may be also provided. In Fig. 3, the transverse plate 16 is attached to the first lateral wall 12.

Still referring to Figs 1 and 3, the first wall 12 is provided with the heating elements 14 to irradiate the preform 15 from a reflecting face. This reflecting face extends along the path, with a length significantly higher (for instance at least four times higher) than an average diameter or similar characteristic dimension of the transversal section in the objects to be heated, here the horizontal section of the plastic preforms 15. The first lateral wall 12 is provided with a main reflector 20 that extends between the transverse plate 16 and an opposite level corresponding to the neck 15a of the preform 15. Such a main reflector 20 is located adjacent said heating elements 14 and is also called a back-reflector. At the opposite, the second lateral wall 13 comprises a first reflector 31, facing at least one part of the preform body 15c and the closed end 15b, and a second reflector 32 facing another part, adjacent the neck 15a, of the preform body 15c.

Referring to Figs 1 and 3, the first reflector 31 extends between a first elongated end 31a and a second elongated end 31b. These first and second ends 31 a, 31b follow the longitudinal direction of the path. The second reflector 32 is physically secured, directly or indirectly, to the first reflector 31 at said first end 31 a. Here the second reflector 32 is directly secured to the first reflector 31 to form an extension. Alternatively, the second reflector 32 may be displaceable with respect to the first reflector 31 and fixed with an adjustable position. The second reflector 32 comprises a first elongated transverse shield portion 33 and a second elongated transverse shield portion 34. An elongated cavity 35 is defined between these first and second transverse shield portions 33, 34. The spacing between the transverse shield portions 33, 34 may be adjusted according to a portion of the preform height that need a more concentrated heating. In one alternative embodiment, at least the second transverse shield portions 34 may be separable from the rest of the second reflector 32. It is here understood that these transverse shield portions 33, 34 are significantly different and greater than the optional raised areas which could provided in the counter reflector, for instance in the first reflector 31.

Referring to Fig. 1, the first reflector 31 is disposed far from the heating elements 14, behind the preform 15. This disposition reduces the complexity of the thermal management close to the heating elements 14. It also permits a better protection of the part of the preform 15 that is distant from the neck 15a.

The second reflector32 is arranged with a U profile and a shorter height, in front of some of the heating elements 14 and behind the preform wall, closer as possible from the preform 15. When the preforms 15 are passing in front of the heating elements 14, reflection of the corresponding radiation is increased at the level of the second reflector 32, which is provided with a proximal reflecting surface. This brings efficient concentration without using additional cooling system. Accordingly, an easy temperature variation over the preform height is obtained at a very low cost. Indeed, this passive solution does not require any complex technology for the heating process.

In the second lateral wall 13, the front face defined by the first reflector 31 and the second reflector 32 advantageously comprises said proximal reflecting surface, which is defined by the surface 350 of said cavity 35, and a distal reflective surface, defined by the first reflector 31. The junction portion(s) of the second reflector 32 that joint said proximal reflecting surface to the distal reflective surface defined by the first reflector 31 is here provided at the level of the first end 31a. As shown in Figs. 2-3, a planar section 40 at the top of the second reflector 32, perpendicular to at least one the two lateral walls 12, 13, is in contact with the first end 31a of the first reflector 31. Here, a portion of this planar section 40 is the junction portion and the first elongated transverse shield portion 33 corresponds to the proximal end of this planar section 40. As depicted in Fig. 2 in particular, another planar section 42 may be provided at the lower side of the second reflector 32, which is arranged in parallel relative to the planar section 40.

Here, the second reflector 32 is arranged with the two transverse shield portions 33, 34 protruding from the rest of the second reflector 32. It can be seen in the non-limitative exemplary embodiments of Fig. 1-3 that the cavity 35 is arranged in a region closer to the preform wall than the distal surface, which is here flat, of the second reflector 32. In alternative embodiments, the distal surface of the first reflector 31 may be profiled, for instance, with a plurality of identical cavities. The proximal reflecting surface extends in a position adjacent to a determined portion of a preform body 15c, here the shoulder region, which extends from the neck 15a, while the distal reflective surface is facing another portion of the preform body 15c, which is complementary to said determined portion. The two transverse shield portions 33, 34 protrude transversally with respect to a plane defined by a major portion the front face. Here the front face extends vertically, parallel to the central axis YY around which the preform 15 extends and may be rotated.

The surface 350 of the cavity 35 is U-shaped in cross section or may be arranged in a general concave shape, for example a parabolic or semi circular shape, a W shape or the like. The depth Dc of the cavity 35 is preferably inferior to the distance Dt between the free edge 33a a of the first transverse shield portion 33 and the first reflector 31. In other words, the proximal surface delimits an interior volume entirely shifted relative to the first end 31a of the first reflector 31. In the non-limitative examples of Figs 1 and 3, a virtual plane secant with the first end 31 a and the second end 31b of the first reflector 31 does not intersect this interior volume. Accordingly, only the interior volume of the cavity 35 has a closer position relative to the path to concentrate the heating on the adjacent preform wall.

As shown in Fig. 1, the radiation from the uppermost heating elements 14 is reflected by the respective top surfaces of the transverse shield portions 33, 34, in order to protect the neck 15a or similar end of the object to be heated. Heating of the neck 15a and of any driven means that cooperate with the neck 15a is thus prevented. It can be seen in Fig. 1 that the transverse shield portion 34 of the second reflector 32 extends very close to the preform 15, at the junction between the body 15c and the neck 15a. The transverse shield portions 33, 34 function here as reflecting cutoff shields, adapted to protect the corresponding intermediary portion of the preform 15 to be further heated by reflected radiation of the most distant lamps 16. As a result, a better control of the heating profile is obtained for the corresponding portion of the preform body 15c. The reflecting top surface of the transverse shield portion 34 may be a planar surface. In this non-limitative embodiment, the transverse shield portion 34 extends at the level of the central axis of the lower heating element 14, which is partly arranged at a lower level than the body 15c. Here, the lower heating element 14 is thus, partly, at a lower level than the proximal reflective surface and the main direction, here inclined, of the radiant output of this heating element 14 is secant with the proximal reflective surface.

A major proportion of the radiation emitted by the lower heating element 14, as shown in Fig. 1 when the neck 15a is down, is reflected by the proximal reflecting surface. Moreover the radiation is then reflected toward the first lateral wall 12 at a lower level than the first transverse shield portion 33. It is understood that a cut-off effect is obtained through use of the two transverse shield portions 33, 34, in order to minimize the losses in the optical system.

Fig. 1 shows reflection of a beam emitted from one of the upper heating elements 14. The top surface, which is here planar, of the first transverse shield portion 33 reflects this beam upward, toward the first reflector 31. This prevents heating of the neck 15a as above indicated and this reflected radiation may advantageously be used for heating of the closed end 15b. As a result, efficiency of the heating process in increased.

A suitable material for the counter reflector defined by the first and second reflectors 31, 32 is a ceramic material or similar heat conductor material, for example material in alumina or such material having high reflectivity (>90%) and high conductivity (>20W/mK). The proximal reflecting surface and the distal reflecting surface may each comprise a material with a melting temperature higher than 600°C. In Figs. 1-3, the respective first and second reflectors 31, 32 may be integrally made of ceramic material. In the embodiment shown in Fig. 4, only the surface that is close may be coated with such a material. Ceramic material or other similar heat-conductor material may be used for this purpose.

Now referring to Fig. 3, it can be seen that the counter reflector with the two different reflectors 31, 32 may be optionally used in an oven of a blow molding machine for heating plastic preforms 15 that are each moved according to a general direction along the transport path. The preforms 15 are preferably rotated around their axis YY, using a mandrel (not shown). Such a mandrel may be longitudinally driven between the two lateral walls 12, 13 and typically cooperates with the neck 15a of the preform 15 by engaging elements. These preforms 15 are intended for the manufacture of containers such as plastic bottles to be filled with a liquid. The method for heating these preforms 15 is performed, here simultaneously with a longitudinal movement of the preforms 15 along the transport path, by heating the preforms 15 (on a predetermined preform height) by the heating elements 14 arranged one above the other according to a general stacking direction, and reflecting the radiation of the heating elements 14 by a counter reflector defined by the first reflector 31 and the second reflector 32. For increasing the heating efficiency, this method comprises:
- partially partitioning the area defined between the first lateral wall 12 and the second lateral wall 13, by the two spaced transverse shield portions 33, 34, to delimit a first operating area 51 extending between the second reflector 32 and a first section of the first lateral wall 12 provided with at least one of said heating elements 14;
- heating more in said first operating area 51 than in a second operating area 52 extending between the first reflector 31 and a second section of the first lateral wall provided with at least one of said heating elements 14, by disposing a reflective surface of the second reflector 32, arranged between said transverse shield portions 33, 34, at a proximal location relative to said preforms 15; and
- protecting the neck, which is facing a non heated area, here an inferior area 53, by cutting off by said transverse shield portions 33, 34 any beam of radiation directed toward said non heated area.

Accordingly, the radiation may be optically concentrated over a specific area, typically a small area, through use of a proximal reflection with the second reflector 32. While the temperature increases in the first operating area 51, here a lower area, such an increase may be controlled with the configuration of the second reflector 32 since impact of the upper heating elements 14 is limited relative to the first operating area 51. As a result, in comparison with a conventional construction of an oven, for a same heating operation, power of one or several radiating lamps or similar heating elements 14 may be reduced and/or the total number of the heating elements 14 may be reduced.

The present invention has been described in connection with the preferred embodiments. These embodiments, however, are merely for example and the invention is not restricted thereto. It will be understood by those skilled in the art that other variations and modifications can easily be made within the scope of the invention as defined by the appended claims, thus it is only intended that the present invention be limited by the following claims. For instance, the invention may be implemented in any machine intended to heat an object, with any possible elongated form for the heating elements 14. Furthermore, the word "elongated" should not be interpreted in a restrictive manner and the length of the respective lateral walls 12, 13 may just be equal or slightly superior to the perimeter or similar dimension of the objects to be heated. The transport path may also be curved and the lateral walls 12, 13 curved in a corresponding manner and/or decomposed in a plurality of successive walls.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

## Claims

1. A heating installation for heating an object by infrared (IR) radiation, comprising:
- a primary reflective device (12) adapted to be arranged with heating elements (14), for reflecting at least a part of IR spectrum emitted from the heating elements towards the object;
- a secondary reflective device (13) facing the primary reflective device (12) in such a manner that IR paths, passing through the object, are defined between the primary reflective device (12) and the secondary reflective device (14);
wherein the secondary reflective device (13) comprises:
- a main reflective portion (31) extending generally along a plane facing the primary reflective device (12);
**characterized in that** the secondary device further comprises:
- a reflective element (32) physically secured to the main reflective portion (31), the reflective element (32) comprising a first and a second shield portions (33, 34), non transparent to at least a part of IR spectrum, spaced apart one from the other and extending from said plane towards the object, and a cavity (35) limited on one hand by said first and second shield portions and on the other hand by a bottom portion joining said first and second shield portions and facing the primary reflective device (12), the inner surface of the cavity is arranged to reflect at least a part of IR spectrum;
and wherein the first shield portion (33) has a free end arranged to be the most proximal part of the secondary reflective device (13) relative to said object.

2. The heating installation according to claim 1, wherein the first shield portion (33) defines with the plane an angle in the range between 45° and 90°.

3. The heating installation according to claim 1, wherein the second shield portion (33) has a free end arranged to be another proximal part of the secondary reflective device (13) relative to said object.

4. The heating installation according to claim 1, wherein the sides of the first and second shield portions located opposite to the cavity (35) reflects or absorbs at least a part of IR spectrum.

5. The heating installation according to claim 1, wherein the bottom portion of the cavity is proximal to the object with respect to the first main reflective portion.

6. The heating installation according to claim 1, wherein said reflective element is arranged to be positioned proximate to a determined portion of the object (15c), so that the first and second shield portions protect this determined portion of the object from a part of the IR radiation present in the heating installation and that the part of IR radiation that is reflected by the reflective element (32) is focused on this determined portion of the object.

7. The heating installation according to claim 1, wherein the primary reflective device (12) comprises back-reflectors (20) associated with heating elements , at least one back-reflector is located at an upper level with respect to the reflective element (32) and at least one back reflector is located at a lower level with respect to the reflective element (32).

8. The heating installation according to claim 1, wherein the secondary reflective device (13) is arranged so that the position of the reflective element (32) with respect to the main reflective portion (31) can be changed.

9. A counter reflective device (13) arranged to face heating elements emitting infrared (IR) radiation through an object located between the heating elements and the counter-reflector, comprising:
- a main reflective portion (31) extending generally according to a plane facing the object to heat;
**characterized in that** said counter reflective device further comprises:
- a reflective element (32) physically secured to the main reflective portion (31), the reflective element (32) comprising a first and a second shield portions (33, 34), non transparent to at least a part of IR spectrum, spaced apart one from the other and extending from said plane towards the object, and a cavity (35) limited by said first and second shield portions and by a bottom portion joining said first and second shield portions, the inner surface of the cavity reflecting at least a part of IR spectrum;
and wherein the first shield portion (33) has a free end arranged to be the most proximal part of the secondary reflective device (13) relative to said object.

10. The counter reflective device according to claim 9, wherein the cavity of said reflective element is U-shaped in cross-section.

11. The counter reflective device according to claim 9, wherein the main reflector (31) and the reflective element (32) each comprise a material with a melting temperature higher than 600°C.

12. The counter reflective device according to claim 9, arranged so that the position of the reflective element (32) with respect to the main reflective portion (31) can be adjusted.

13. A method of heating an object that is moved according to a general direction along a defined path, comprising:
- heating said object by a plurality of heating elements (14) facing said object and arranged in a first lateral wall (12) one above the other according to a general stacking direction;
- reflecting radiation of said heating elements by a first reflector (31) and a second reflector (32) that define a second lateral wall (13) on the opposite side of the defined path relative to said first lateral wall (12);
- partially partitioning an area defined between said first lateral wall and said second lateral wall, by two spaced protruding transverse shield portions (33, 34) of said second reflector (32), to delimit a first operating area (51) extending between the second reflector and a first section of the first lateral wall provided with at least one of said heating elements; and
- limiting the radiation entering and respectively exiting said first operating area (51), by a IR cutoff shield arranged at a proximal location relative to said object and defined by at least one of said transverse shield portions (33, 34).

14. The method according to claim 13, comprising more heating in said first operating area (51) than in a second operating area (52) extending between the first reflector (31) and a second section of the first lateral wall (12) provided with at least one of said heating elements (14), by disposing a reflective surface of the second reflector (32), arranged between said transverse shield portions (33, 34), at a proximal location with respect to said object.

15. The method according to claim 13 wherein said object is a thermoplastic preform (15) intended for the manufacture of a container after a forming of the heated object, said method further comprising:
- moving said preform (15) along the defined path through use of a mandrel, the mandrel cooperating with an end neck (15a) of the preform, said end neck facing a non heated area (53);
- rotating said mandrel; and
- at the opposite of the first wall, reflecting by said transverse shield portions (33, 34) of the second reflector any beam of radiation directed toward said non heated area.

16. The method according to claim 13 wherein at least one additional said reflective elements are provided with specific distances between each other in order to make hotter parts or lines along the object height.

## Patentansprüche

1. Erwärmungsanlage, um einen Gegenstand durch Infrarotstrahlung (IR) zu erwärmen, die Folgendes umfasst:
- eine primäre Reflexionseinrichtung (12), die dafür ausgelegt ist, mit Heizelementen (14) angeordnet zu werden, um mindestens einen Teil des IR-Spektrums, das von den Heizelementen emittiert worden ist, zu dem Gegenstand zu reflektieren;
- eine sekundäre Reflexionseinrichtung (13), die der primären Reflexionseinrichtung (12) in der Weise zugewandt ist, dass die IR-Wege, die durch den Gegenstand verlaufen, zwischen der primären Reflexionsschicht (12) und der sekundären Reflexionsschicht (14) definiert sind;
wobei die sekundäre Reflexionseinrichtung (13) Folgendes umfasst:
- einen Hauptreflexionsabschnitt (31), der sich im Allgemeinen entlang einer Ebene erstreckt, die der primären Reflexionseinrichtung (12) zugewandt ist;
**dadurch gekennzeichnet, dass** die sekundäre Reflexionseinrichtung ferner umfasst:
- ein Reflexionselement (32), das an dem Hauptreflexionsabschnitt (31) körperlich befestigt ist, wobei das Reflexionselement (32) einen ersten und einen zweiten Abschirmungsabschnitt (33, 34), die zumindest für einen Teil des IR-Spektrums nicht durchlässig sind, voneinander beabstandet angeordnet sind und sich von der Ebene zu dem Gegenstand erstrecken, und einen Hohlraum (35), der einerseits durch den ersten und den zweiten Abschirmungsabschnitt und andererseits durch einen unteren Abschnitt, der den ersten und den zweiten Abschirmungsabschnitt miteinander verbindet, begrenzt ist und der der primären Reflexionseinrichtung (12) zugewandt ist, umfasst, wobei die innere Oberfläche des Hohlraums angeordnet ist, um mindestens einen Teil des IR-Spektrums zu reflektieren;
und wobei der erste Abschirmungsabschnitt (33) ein freies Ende aufweist, das so angeordnet ist, dass es das am nächsten liegendste Teil der sekundären Reflexionseinrichtung (13) relativ zu dem Gegenstand ist.

2. Erwärmungsanlage nach Anspruch 1, wobei der erste Abschirmungsabschnitt (33) mit der Ebene einen Winkel im Bereich von 45° bis 90° definiert.

3. Erwärmungsanlage nach Anspruch 1, wobei der zweite Abschirmungsabschnitt (33) ein freies Ende aufweist, das so angeordnet ist, dass es ein anderes nahekommendes Teil der sekundären Reflexionseinrichtung (13) relativ zu dem Gegenstand ist.

4. Erwärmungsanlage nach Anspruch 1, wobei die Seiten des ersten und des zweiten Abschirmungsabschnitts, die gegenüber dem Hohlraum (35) angeordnet sind, mindestens einen Teil des IR-Spektrums reflektieren oder absorbieren.

5. Erwärmungsanlage nach Anspruch 1, wobei der untere Abschnitt des Hohlraums mit Bezug auf den ersten Hauptreflexionsabschnitt nahe zu dem Gegenstand ist.

6. Erwärmungsanlage nach Anspruch 1, wobei das Reflexionselement so angeordnet ist, dass es nahe zu einem bestimmten Abschnitt des Objekts (15c) positioniert ist, so dass der erste und der zweite Abschirmungsabschnitt diesen bestimmten Abschnitt des Objekts vor einem Teil der IR-Strahlung, der in der Erwärmungsanlage vorhanden ist, schützen und dass der Teil der IR-Strahlung, der durch das Reflexionselement (32) reflektiert worden ist, auf diesen bestimmten Abschnitt des Objekts fokussiert wird.

7. Erwärmungsanlage nach Anspruch 1, wobei die primäre Reflexionseinrichtung (12) Rückreflektoren (20), die mit Heizelementen verbunden sind, umfasst, wobei mindestens ein Rückreflektor auf einer höheren Ebene in Bezug auf das Reflexionselement (32) angeordnet ist, und wobei mindestens ein Rückreflektor auf einer niedrigeren Ebene in Bezug auf das Reflexionselement (32) angeordnet ist.

8. Erwärmungsanlage nach Anspruch 1, wobei die sekundäre Reflexionseinrichtung (13) so angeordnet ist, dass die Position des Reflexionselements (32) in Bezug auf das Hauptreflexionselement (31) geändert werden kann.

9. Gegenreflexionseinrichtung (13), die so angeordnet ist, dass sie Heizelementen zugewandt ist, die Infrarotstrahlung (IR) durch einen Gegenstand, der zwischen den Heizelementen und dem Gegenreflektor angeordnet ist, emittieren, wobei der Gegenreflektor Folgendes umfasst:
- einen Hauptreflexionsabschnitt (31), der sich im Allgemeinen entsprechend einer Ebene erstreckt, die dem Gegenstand zugewandt ist;
**dadurch gekennzeichnet, dass** die Gegenreflexionseinrichtung ferner Folgendes umfasst:
- ein Reflexionselement (32), das körperlich an dem Hauptreflexionsabschnitt (31) befestigt ist, wobei das Reflexionselement (32) einen ersten und einen zweiten Abschirmungsabschnitt (33, 34), die zumindest gegenüber einem Teil des IR-Spektrums nicht durchlässig sind, voneinander beabstandet angeordnet sind und sich von der Ebene in Richtung des Gegenstands erstrecken, und einen Hohlraum (35), der durch den ersten und durch den zweiten Abschirmungsabschnitt und durch einen unteren Abschnitt, der den ersten und den zweiten Abschirmungsabschnitt miteinander verbindet, begrenzt ist, umfasst, wobei die innere Oberfläche des Hohlraums mindestens einen Teil des IR-Spektrums reflektiert;
und wobei der erste Abschirmungsabschnitt (33) ein freies Ende aufweist, das so angeordnet ist, dass es das am nächsten liegendste Teil der sekundären Reflexionseinrichtung (13) relativ zu dem Gegenstand ist.

10. Gegenreflexionseinrichtung nach Anspruch 9, wobei der Hohlraum des Reflexionselements im Querschnitt U-förmig ist.

11. Gegenreflexionseinrichtung nach Anspruch 9, wobei der Hauptreflektor (31) und das Reflexionselement (32) jeweils ein Material mit einer Schmelztemperatur höher als 600 °C umfassen.

12. Gegenreflexionseinrichtung nach Anspruch 9, die so angeordnet ist, dass die Position des Reflexionselements (32) in Bezug auf den Hauptreflexionsabschnitt (31) angepasst werden kann.

13. Verfahren zum Erwärmen eines Gegenstands, der entsprechend einer allgemeinen Richtung entlang eines definierten Weges bewegt wird, das Folgendes umfasst:
Erwärmen des Gegenstands durch mehrere Heizelemente (14), die dem Gegenstand zugewandt sind und in einer ersten Seitenwand (12) übereinander entsprechend einer allgemeinen Stapelrichtung angeordnet sind;
Reflektieren einer Strahlung der Heizelemente durch einen ersten Reflektor (31) und durch einen zweiten Reflektor (32), die eine zweite Seitenwand (13) auf der gegenüberliegenden Seite des definierten Weges relativ zu der ersten Seitenwand (12) definieren;
teilweises Unterteilen eines Bereichs, der zwischen der ersten Seitenwand und der zweiten Seitenwand definiert ist, durch zwei beabstandet vorstehende, querverlaufende Abschirmungsabschnitte (33, 34) des zweiten Reflektors (32), um einen ersten Betriebsbereich (51), der sich zwischen dem zweiten Reflektor und einem ersten Abschnitt der ersten Seitenwand erstreckt und mit mindestens einem der Heizelemente versehen ist, zu begrenzen; und
Begrenzen der Strahlung, die in den ersten Betriebsbereich (51) eintritt und jeweils aus ihm austritt, durch eine IR-Sperrabschirmung, die an einem nahe liegenden Ort relativ zu dem Gegenstand angeordnet ist und durch mindestens einen der querverlaufenden Abschirmungsabschnitte (33, 34) definiert ist.

14. Verfahren nach Anspruch 13, das ein stärkeres Erwärmen in dem ersten Betriebsbereich (51) als in einem zweiten Betriebsbereich (52) umfasst, der sich zwischen dem ersten Reflektor (31) und einem zweiten Abschnitt der ersten Seitenwand (12) erstreckt und mit mindestens einem der Heizelemente (14) versehen ist, durch Anordnen einer Reflexionsoberfläche des zweiten Reflektors (32), der zwischen den querverlaufenden Abschirmungsabschnitten (33, 34) an einem nahen Ort in Bezug auf den Gegenstand angeordnet ist.

15. Verfahren nach Anspruch 13, wobei der Gegenstand eine thermoplastische Vorform (15) ist, die nach der Ausformung des erwärmten Gegenstandes der Herstellung eines Behälters dient, wobei das Verfahren ferner Folgendes umfasst:
Bewegen der Vorform (15) entlang des definierten Weges durch Verwenden eines Dorns, wobei der Dorn mit einem Stutzen (15a) der Vorform zusammenwirkt, wobei der Stutzen einem nicht erwärmten Bereich (53) zugewandt ist;
Drehen des Dorns; und
auf der Gegenseite der ersten Wand Reflektieren jedes Strahls der Strahlung, die auf den nicht erwärmten Bereich gerichtet ist, durch die querverlaufenden Abschirmungsabschnitte (33, 34) des zweiten Reflektors.

16. Verfahren nach Anspruch 13, wobei mindestens ein zusätzliches Reflexionselement so vorgesehen ist, dass spezifische Abstände zwischen ihnen vorhanden sind, um heißere Teile oder Linien entlang der Gegenstandshöhe herzustellen.

## Revendications

1. Installation de chauffage destinée à chauffer un objet par rayonnement infrarouge (IR), l'installation comprenant :
un dispositif réfléchissant primaire (12) adapté pour être agencé avec des éléments chauffants (14) de manière à réfléchir en direction de l'objet au moins une partie du spectre IR émis par les éléments chauffants,
un dispositif réfléchissant secondaire (13) situé face au dispositif réfléchissant primaire (12) de manière à définir entre le dispositif réfléchissant primaire (12) et le dispositif réfléchissant secondaire (14) des parcours IR traversant l'objet,
le dispositif réfléchissant secondaire (13) comprenant :
une partie réfléchissante principale (31) qui s'étend globalement dans un plan tourné vers le dispositif réfléchissant primaire (12),
**caractérisée en ce que**
le dispositif secondaire comprend en outre un élément réfléchissant (32) fixé physiquement à la partie réfléchissant principale (31),
**en ce que** l'élément réfléchissant (32) comprend
une première et une deuxième partie d'écran (33, 34) opaques à au moins une partie du spectre IR, maintenues à distance l'une de l'autre et, partant dudit plan, s'étendant en direction de l'objet, et
une cavité (35) limitée d'une part par ladite première et ladite deuxième partie d'écran et d'autre part par une partie de base qui relie ladite première et ladite deuxième partie d'écran et située face au dispositif réfléchissant primaire (12), la surface intérieure de la cavité étant agencée de manière à réfléchir au moins une partie du spectre IR et
**en ce que** ladite première partie d'écran (33) présente une extrémité libre agencée de manière à former la partie du dispositif réfléchissant secondaire (13) la plus proche dudit objet.

2. Installation de chauffage selon la revendication 1, dans laquelle la première partie d'écran (33) forme avec le plan un angle compris dans la plage de 45° à 90°.

3. Installation de chauffage selon la revendication 1, dans laquelle la deuxième partie d'écran (33) présente une extrémité libre agencée pour former une autre partie du dispositif réfléchissant secondaire (13) située à proximité dudit objet.

4. Installation de chauffage selon la revendication 1, dans laquelle les côtés de la première et de la deuxième partie d'écran situé face à la cavité (35) réfléchissent ou absorbent au moins une partie du spectre IR.

5. Installation de chauffage selon la revendication 1, dans laquelle la partie de base de la cavité est plus proche de l'objet que la première partie réfléchissante principale.

6. Installation de chauffage selon la revendication 1, dans laquelle ledit élément réfléchissant est agencé de manière à être disposé à proximité d'une partie déterminée de l'objet (15c) de telle sorte que la première et la deuxième partie d'écran protègent cette partie déterminée de l'objet d'une partie de rayonnement IR présent dans l'installation de chauffage et en ce que la partie de rayonnement IR réfléchie par l'élément réfléchissant (32) est concentrée sur cette partie déterminée de l'objet.

7. Installation de chauffage selon la revendication 1, dans laquelle le dispositif réfléchissant primaire (12) comprend des réflecteurs arrière (20) associés à des éléments chauffants, au moins un réflecteur arrière étant agencé plus haut que l'élément réfléchissant (32) et au moins un réflecteur arrière étant agencé plus bas que l'élément réfléchissant (32).

8. Installation de chauffage selon la revendication 1, dans laquelle le dispositif réfléchissant secondaire (13) est agencé de manière à pouvoir modifier la position de l'élément réfléchissant (32) par rapport à la partie réfléchissante principale (31).

9. Dispositif contre-réfléchissant (13) agencé de manière à être placé en face d'éléments chauffants émettant un rayonnement infrarouge (IR) à travers un objet situé entre les éléments chauffants et le contre-réflecteur,
le dispositif comprenant une partie réfléchissante principale (31) qui s'étend globalement dans un plan situé face à l'objet à chauffer,
**caractérisé en ce que** ledit dispositif réfléchissant à compteur comprend en outre :
un élément réfléchissant (32) fixé physiquement à la partie réfléchissante principale (31), l'élément réfléchissant (32) comprenant
une première et une deuxième partie d'écran (33, 34) opaques à au moins une partie du spectre IR, maintenues à distance l'une de l'autre et, partant dudit plan, s'étendant en direction de l'objet, et
une cavité (35) délimitée par ladite première, ladite deuxième partie d'écran et par une partie de base qui relie ladite première et ladite deuxième partie d'écran, la surface intérieure de la cavité réfléchissant au moins une partie du spectre IR, et
**en ce que** la première partie d'écran (33) présente une extrémité libre agencée de manière à former la partie du dispositif réfléchissant secondaire (13) la plus proche dudit objet.

10. Dispositif contre-réfléchissant selon la revendication 9, dans lequel la cavité dudit élément réfléchissant a une section transversale en forme de U.

11. Dispositif contre-réfléchissant selon la revendication 9, dans lequel le réflecteur principal (31) et l'élément réfléchissant (32) comprennent tous deux un matériau dont la température de fusion est supérieure à 600°C.

12. Dispositif contre-réfléchissant selon la revendication 9, agencé de manière à pouvoir ajuster la position de l'élément réfléchissant (32) par rapport à la partie réfléchissante principale (31).

13. Procédé de chauffage d'un objet déplacé dans une direction qui suit globalement un parcours défini, le procédé comportant les étapes qui consistent à :
chauffer ledit objet par plusieurs éléments chauffants (14) tournés vers ledit objet et agencés dans une première paroi latérale (12) les uns au-dessus des autres dans une direction globale d'empilement,
faire réfléchir le rayonnement desdits éléments chauffants par un premier réflecteur (31) et un deuxième réflecteur (32) qui définissent une deuxième partie latérale (13) située sur le côté du parcours défini opposé à ladite première paroi latérale (12),
diviser partiellement une zone définie entre ladite première paroi latérale et ladite deuxième paroi latérale par deux parties d'écran (33, 34) dudit deuxième réflecteur (32) de manière à délimiter une première zone de travail (51) qui s'étend entre le deuxième réflecteur et une première partie de la première paroi latérale dotée d'au moins l'un desdits éléments chauffants et
limiter le rayonnement qui pénètre et/ou quitte ladite première zone de travail (51) par un écran de coupure IR agencé à proximité dudit objet et défini par au moins l'une desdites parties transversales d'écran (33, 34).

14. Procédé selon la revendication 13, comprenant davantage de chauffage dans ladite première zone de travail (51) que dans une deuxième zone de travail (52) qui s'étend entre le première réflecteur (31) et une deuxième partie de la première paroi latérale (12), dotée d'au moins l'un desdits éléments chauffants (14), en disposant une surface réfléchissante du deuxième réflecteur (32) agencé entre lesdites parties transversales d'écran (33, 34) à proximité dudit objet.

15. Procédé selon la revendication 13, dans lequel ledit objet est une ébauche thermoplastique (15) destinée à la fabrication d'un récipient après la formation de l'objet chauffé, ledit procédé comportant en outre les étapes qui consistent à :
déplacer ladite ébauche (15) le long du parcours défini en utilisant un mandrin, le mandrin coopérant avec un col d'extrémité (15a) de l'ébauche, ledit col d'extrémité étant tourné vers une zone (53) non chauffée,
faire tourner ledit mandrin et
à l'opposé de la première paroi, faire réfléchir par lesdites parties transversales d'écran (33, 34) du deuxième réflecteur tout faisceau de rayonnement dirigé vers ladite zone non chauffée.

16. Procédé selon la revendication 13, dans lequel un ou plusieurs éléments réfléchissants supplémentaires sont prévus à des distances spécifiques les uns entre les autres de manière à former des parties ou lignes plus chaudes dans le sens de la hauteur de l'objet.
